# EUROPÄISCHE PATENTSCHRIFT

(11) **EP 3 203 263 B1**
(45) Veröffentlichungstag und Bekanntmachung des Hinweises auf die Patenterteilung: **18.04.2018**
(21) Anmeldenummer: 16154025.7
(22) Anmeldetag: 03.02.2016
(51) Int. Cl.: G01S 17/42, G01S 7/481, G01S 7/497, G01S 7/51

(54) **OPTOELEKTRONISCHER SENSOR UND VERFAHREN ZUM ERFASSEN VON OBJEKTEN**
OPTOELECTRONIC SENSOR AND METHOD FOR DETECTING OBJECTS
CAPTEUR OPTOÉLECTRONIQUE ET PROCÉDÉ DESTINÉ À LA SAISIE D'OBJETS

(43) Veröffentlichungstag der Anmeldung: 09.08.2017
(73) Patentinhaber: SICK AG, 79183 Waldkirch (DE)
(72) Erfinder: Baldischweiler, Boris, 79194 Gundelfingen (DE); Steinborn, Olaf, 77654 Offenburg (DE)

(56) Entgegenhaltungen:
- EP-A1- 2 530 485
- DE-U1-202009 012 589
- US-A1- 2012 057 174

## Beschreibung

Die Erfindung betrifft einen optoelektronischen Sensor, insbesondere einen Laserscanner, und ein Verfahren zum Erfassen von Objekten nach dem Oberbegriff von Anspruch 1 beziehungsweise 10.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen.

Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden.

Sicherheitslaserscanner müssen besonders zuverlässig arbeiten und deshalb hohe Sicherheitsanforderungen erfüllen, beispielsweise die Norm EN 13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe.

Eine Verallgemeinerung eines Schutzfeldes auch für Anwendungen außerhalb der Sicherheitstechnik, etwa für die Automatisierungstechnik, wird hier als Detektionsfeld bezeichnet. Detektionsfelder sind virtuell definierte Teilbereiche des Überwachungsbereichs des Laserscanners, die üblicherweise zur Einrichtzeit konfiguriert und zur Laufzeit ausgewertet werden. Die Detektionsfelder legen fest, welche Bereiche der erfassten Szenerie auf Objekte hin auszuwerten sind, wobei sich dies möglicherweise nur jeweils auf einen bestimmten Zeitpunkt bezieht und sich die Definition der Detektionsfelder zu einem anderen Zeitpunkt verändert. Der Typ des Detektionsfeldes bestimmt, welche Art der Auswertung vorzunehmen ist und welche Reaktion ein Objekteingriff in ein Detektionsfeld auslöst. Bei den schon angesprochenen Schutzfeldern führt ein Objekteingriff zu einer sicherheitsgerichteten Abschaltung. Warnfelder sind zumeist Schutzfeldern vorgelagert und lösen einen Alarm aus, ohne direkt in das System einzugreifen, und sollen in der Regel durch den Alarm einen weitergehenden Eingriff in ein Schutzfeld noch rechtzeitig verhindern. Automatisierungsfelder sind der allgemeine Komplementärbegriff zu Schutz- und Warnfeldern, also nicht sicherheitsrelevant, sondern werden beispielsweise in Form eines Funktionsfeldes als virtueller Schalter, als Messfeld zu Bestimmung von Volumina oder für andere Messungen genutzt.

Das Konfigurieren von Detektionsfeldern, vor allem im Falle der sicherheitsrelevanten Schutzfelder, ist für eine ordnungsgemäße Funktion des Laserscanners wesentlich. Dennoch werden dem Benutzer derzeit relativ wenig Hilfsmittel zur Verfügung gestellt. Üblicherweise erfolgt eine Eingabe der Grenzen des Detektionsfeldes im Laserscanner oder in einer Konfigurationssoftware. Dabei müssen die Abmessungen des Detektionsfeldes bekannt sein, und es gibt kein Feedback in der tatsächlichen Szenerie außer durch mühsames Austesten mit einem Prüfstab. Es ist zwar auch bekannt, die Schutzfelder durch Klebebänder oder farbige Flächen zu kennzeichnen. Das enthebt den Benutzer aber nicht davon, dafür zu sorgen, dass in dem Laserscanner tatsächlich die so gekennzeichneten Bereiche als Detektionsfelder konfiguriert sind.

Aus der DE 20 2009 012 589 U1 ist unter anderem ein Laserscanner bekannt, der einen sichtbaren Lichtstrahl in Richtung eines in einem Schutzbereich erfassten Objekts aussendet. Damit wird die Überprüfung der konfigurierten Schutzfelder erleichtert, aber es ist weiterhin jeweils nur ein punktueller Test möglich und fehlt an einem Gesamtüberblick.

Die US 2012/0057174 A1 offenbart einen Laserscanner mit einem integrierten Projektor, der dazu in der Lage ist, sichtbare Informationen auf ein in der Umgebung befindliches Objekts zu projizieren. Diese Informationen sind beispielsweise Bilder, CAD-Daten oder Punktwolken von Scannermessungen. So wird beispielsweise eine Textur über ein Objekt oder ein virtuelles Objekt in einer geplanten oder idealen Konfiguration über das tatsächliche Objekt projiziert. Es ist aber weder eine Absicherung mit Hilfe von Schutzfeldern noch eine Visualisierung von Detektionsfeldern vorgesehen.

Die US 2005/0052720 A1 befasst sich mit einem Laserprojektionssystem, bei dem ein Laserstrahl mit Hilfe zweier zueinander senkrecht angeordneter, rotierende Ablenkspiegel in zwei Dimensionen lenkbar ist. Es gibt aber keinen Zusammenhang mit Laserscannern.

Es ist deshalb Aufgabe der Erfindung, in einem Laserscanner den Umgang mit Detektionsfeldern zu vereinfachen.

Diese Aufgabe wird durch einen optoelektronischen Sensor, insbesondere einen Laserscanner, und ein Verfahren zum Erfassen von Objekten nach Anspruch 1 beziehungsweise 10 gelöst. Der Sensor führt einen Abtaststrahl eines Lichtsenders periodisch mit Hilfe einer beweglichen Ablenkeinheit durch den Überwachungsbereich und wertet das Empfangssignal eines Lichtempfängers aus. Die bewegliche Ablenkeinheit ist häufig ein Drehspiegel, es kann aber auch beispielsweise ein Messkopf mit Lichtsender und Lichtempfänger rotieren. Der Sensor überwacht durch Auswertung des Empfangssignals in einer Auswertungseinheit ein Detektionsfeld oder mehrere Detektionsfelder auf Objekteingriffe. Die Erfindung geht nun von dem Grundgedanken aus, die Detektionsfelder in dem Überwachungsbereich zu visualisieren. Dazu ist ein Projektor vorgesehen, der die Detektionsfelder kennt, etwa durch gemeinsamen Zugriff von Projektor und Auswertungseinheit auf einen entsprechenden Konfigurationsspeicher oder eine Daten- oder Steuerverbindung zwischen Projektor und Auswertungseinheit. Die Visualisierung kann bedeuten, dass das gesamte Detektionsfeld homogen oder mit einem Muster beleuchtet wird. Es genügt aber alternativ auch, die Außengrenzen oder nur einige markante Bereiche, wie Ecken oder ein Zentrum, durch Punkte, Fadenkreuze oder dergleichen darzustellen.

Die Erfindung hat den Vorteil, dass das Einrichten und Kontrollieren von Detektionsfeldern erheblich erleichtert wird. Es entfällt außerdem eine wesentliche Fehlerquelle, weil sofort erkennbar ist, wo die Detektionsfelder liegen, und es deshalb keine unbemerkten Diskrepanzen zwischen den gewünschten und den tatsächlichen Detektionsfeldern geben kann. Obwohl die Visualisierung in erster Linie für eine anfängliche Konfiguration gedacht ist, kann es auch während des Betriebs nützlich sein, die Detektionsfelder dauerhaft oder auf Anforderung anzuzeigen, etwa damit Personen im Arbeitsbereich des Laserscanners versehentliche Eingriffe in das Detektionsfeld leichter vermeiden oder sich an eine neue Konfiguration gewöhnen können.

Eine Steuereinheit des Projektors ist dafür ausgebildet, das Detektionsfeld durch Projektion auf den Boden zu visualisieren. Der Boden bietet eine gut sichtbare Projektionsfläche. So können Detektionsfelder besonders leicht an Gefahrenquellen oder Arbeitsbereiche angepasst werden.

Die Steuereinheit ist für eine Kalibrierung ausgebildet, in der Höhe und/oder Neigung des Projektors festgestellt wird. Aus diesen Parametern kann die Steuereinheit berechnen, wie die Detektionsfelder passend aus der eigenen Perspektive auf den Boden projiziert werden. Ohne Kalibrierung müssten die Werte vorgegeben, beispielsweise parametriert werden, oder es entsteht eine Ungenauigkeit, wenn die Detektionsfelder nicht in Bodenhöhe konfiguriert sind, was praktisch immer der Fall ist.

Der Projektor weist bevorzugt eine rotierende Lichtquelle auf. Das Projektionsverfahren ähnelt dann dem Abtastverfahren des Laserscanners. Unter einer rotierenden Lichtquelle wird sowohl eine selbst physisch bewegte Lichtquelle als auch eine Rotationsbewegung nur des Lichtstrahls mit Hilfe eines Drehspiegels verstanden. Die Lichtquelle ist vorzugsweise ein Laser im sichtbaren Wellenlängenbereich.

Der Projektor weist bevorzugt eine Verkippeinheit zur Einstellung der Neigung der Lichtquelle auf. Dadurch ist die Projektion in Elevation veränderbar. In Kombination mit einer rotierenden Lichtquelle ergibt sich die Möglichkeit, beliebige geometrische Formen in Polarkoordinaten und damit beliebig gestaltete Detektionsfelder zu projizieren.

Die Neigung kann durch Verkippung der Lichtquelle selbst, aber auch durch Verkippen eines nachgeordneten Spiegels, insbesondere eines Drehspiegels erreicht werden. Geeignet ist beispielsweise ein steuerbarer Mikrospiegel (DLP, Digital Light Processing).

Der Projektor weist vorzugsweise einen Neigungssensor auf. Damit kann die Kalibrierung auf die tatsächliche Neigung jederzeit automatisch ohne Eingriff des Bedienpersonals erfolgen.

Der Projektor weist bevorzugt einen Detektor auf, um die Höhe des Projektors zu bestimmen. So wird auch die Höhe automatisch erfassbar. Beispielsweise ist ein kleiner Detektor unterhalb der Lichtquelle des Projektors angebracht und die Höhe dann anhand des Projektionsstrahls trianguliert. Mit Neigungssensor und Detektor oder anderen Erfassungsmitteln für Neigung und Höhe ist dann insgesamt eine selbsttätige Kalibration möglich und kein händisches Einmessen erforderlich.

Der Projektor ist vorzugsweise als Zusatzmodul ausgebildet. Beispielsweise ist der Projektor ein eigenes Aufsatzgerät. Dann sind Kalibrierflächen vorteilhaft, die Projektor und Laserscanner in eine genau definierte und bekannte Relativlage bringen. Ein Vorteil eines Zusatzgeräts ist die Möglichkeit der Nachrüstung. Außerdem kann beispielsweise nur ein Servicetechniker oder eine für die Anlage verantwortliche Person mit einem einzigen Zusatzmodul eine beliebige Anzahl von Laserscannern nacheinander konfigurieren.

Der Projektor ist vorzugsweise in den Sensor integriert. Nochmals bevorzugt nutzt der Projektor die Ablenkeinheit des Abtaststrahls mit. Es rotiert also beispielsweise auch die Lichtquelle des Projektors in einem beweglichen Messkopf mit Lichtsender und Lichtempfänger des Abtaststrahls. Alternativ wird der sichtbare Lichtstrahl des Projektors in einem der jeweils gewünschten Neigung entsprechenden Winkel auf den Drehspiegel gekoppelt. Ein Vorteil einer integrierten Lösung ist, dass für die Drehbewegung des Projektors der ohnehin schon vorhandene Antrieb der Ablenkeinheit doppelt genutzt wird.

Der Projektor weist bevorzugt mehrere rotierende Lichtquellen mit unterschiedlichen Wellenlängen auf. Die Lichtquellen weisen nochmals bevorzugt einen gegenseitigen Winkelversatz auf. Durch unterschiedliche Wellenlängen ergeben sich neue Darstellungsmöglichkeiten, mit denen Detektionsfelder oder Teile davon in eigenen Farben visualisiert werden können. Eine bevorzugte Ausführungsform zeigt unterschiedliche Typen von Detektionsfeldern in eigener Farbe, etwa Warnfelder in einer anderen Farbe als Schutzfelder.

Der Sensor ist vorzugsweise als Entfernungsmesser ausgebildet, indem die Auswertungseinheit die Lichtlaufzeit zwischen Aussenden und Empfang des Lichtsignals und daraus die Entfernung eines Objekts bestimmt und/oder wobei eine Winkelmesseinheit zur Erfassung der Winkelstellung der Ablenkeinheit vorgesehen ist. Über die Entfernungs- und Winkelmessungen stehen vollständige zweidimensionale Polarkoordinaten zur Verfügung, mit denen in einem als Ebene ausgebildeten Überwachungsbereich beliebige Detektionsfelder definiert werden können. Das korrespondiert gerade mit einem Projektor, der durch Rotation und Verkippung der Lichtquelle ebenfalls beliebige geometrische Formen in Polarkoordinaten und damit sämtliche Detektionsfelder visualisieren kann.

Der Sensor ist vorzugsweise als Sicherheitslaserscanner ausgebildet und weist einen Sicherheitsausgang (OSSD, Output Signal Switching Device) auf, wobei die Auswertungseinheit dafür ausgebildet ist zu bestimmen, ob sich ein Objekt in einem als Schutzfeld ausgebildeten Detektionsfeld innerhalb des Überwachungsbereichs befindet, um daraufhin ein sicherheitsgerichtetes Abschaltsignal über den Sicherheitsausgang auszugeben. In dieser sicherheitstechnischen Ausprägung ist die Übereinstimmung gewünschter und tatsächlicher Schutzfelder besonders kritisch und daher deren intuitive Erkennbarkeit besonders hilfreich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittzeichnung eines erfindungsgemäßen Laserscanners; und
- Fig. 2: eine schematische Darstellung eines Laserscanners in einer Anwendungsumgebung zur Illustration der Projektion von Detektionsfeldern.

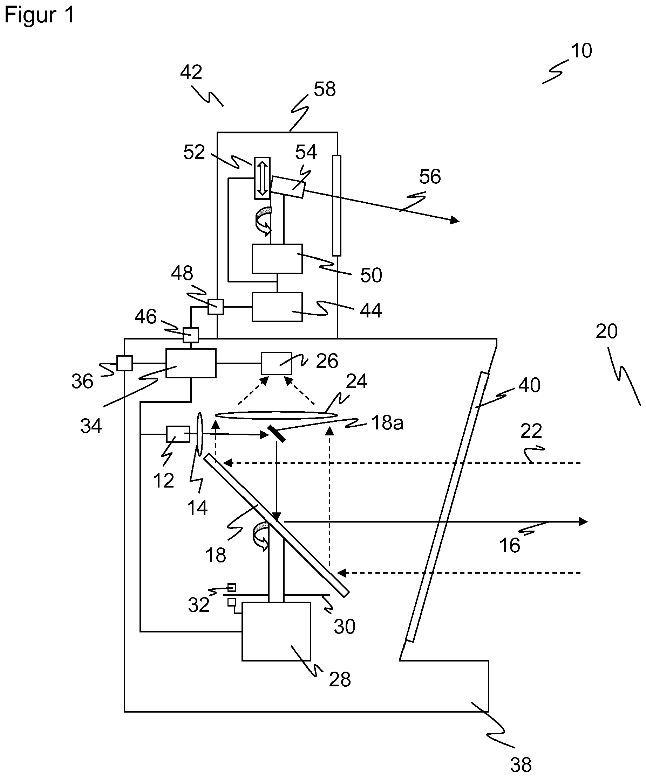

Fig. 1 zeigt eine schematische Schnittdarstellung durch einen Laserscanner 10. Ein Lichtsender 12, beispielsweise mit einer Laserlichtquelle, erzeugt mit Hilfe einer Sendeoptik 14 einen Sendelichtstrahl 16, der über einen Spiegel 18a an einer beweglichen Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Laserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode).

Die Ablenkeinheit 18 ist in dieser Ausführungsform als Drehspiegel ausgestaltet, die durch Antrieb eines Motors 28 kontinuierlich rotiert. Die jeweilige Winkelstellung des Motors 28 beziehungsweise der Ablenkeinheit 18 wird über einen Encoder erkannt, der beispielsweise eine Codescheibe 30 und eine Gabellichtschranke 32 umfasst. Der von dem Lichtsender 12 erzeugte Sendelichtstrahl 16 überstreicht somit den durch die Rotationsbewegung erzeugten Überwachungsbereich 20. Anstelle eines Drehspiegels ist es auch möglich, die Ablenkeinheit 18 als rotierenden Optikkopf auszubilden, in dem Lichtsender 12 und/oder Lichtempfänger 26 und möglicherweise weitere Elemente untergebracht sind. Auch die Einkopplung über den Spiegel 18a sowie die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Laserscanner auch in einer Doppelaugenanordnung mit nebeneinander liegenden Sende- und Empfangspfaden bekannt.

Wird nun von dem Lichtempfänger 26 remittiertes Licht 22 aus dem Überwachungsbereich 20 empfangen, so kann aus der von dem Encoder 30, 32 gemessenen Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Laserscanner 10 geschlossen.

Diese Auswertung erfolgt in einer Auswerteeinheit 34, die dafür mit dem Lichtsender 12, dem Lichtempfänger 26, dem Motor 28 und dem Encoder 32 verbunden ist. Somit stehen über den Winkel und die Entfernung zweidimensionale Polarkoordinaten aller Objekte in dem Überwachungsbereich 20 zur Verfügung. In sicherheitstechnischer Anwendung prüft die Auswertungseinheit 34, ob ein unzulässiges Objekt in einen innerhalb des Überwachungsbereichs 20 festgelegten Schutzbereich eingreift. Ist das der Fall, wird über einen Sicherheitsausgang 36 (OSSD, Output Signal Switching Device) ein Absicherungssignal an eine überwachte Gefahrenquelle, beispielsweise eine Maschine ausgegeben. Der Laserscanner 10 ist in derartigen sicherheitstechnischen Anwendungen durch Maßnahmen entsprechend der einleitend genannten Normen ein sicherer Laserscanner. In andern Ausführungsformen ist anstelle des Sicherheitsausgangs 36 oder zusätzlich dazu eine Schnittstelle zur Ausgabe von Messdaten oder beispielsweise zum Parametrieren des Laserscanners 10 vorgesehen.

Alle bisher genannten Funktionskomponenten sind in einem Gehäuse 38 angeordnet, das im Bereich des Lichtaus- und Lichteintritts eine Frontscheibe 40 aufweist. Die Gestaltung des Gehäuses 38 mit einem rückwärtigen Bereich ohne Frontscheibe 40 ist rein beispielhaft. In anderen Ausführungsformen umfasst die Frontscheibe 40 den gesamten 360°-Sichtbereich.

Für die Schutzfeldüberwachung müssen der Auswertungseinheit 34 die Schutzfeldgrenzen bekannt sein. Obwohl im Folgenden das Beispiel von Schutzfeldern erläutert wird, gilt dies entsprechend auch für andere Detektionsfelder, also insbesondere Warnfelder oder auch Automatisierungsfelder. Die Konfiguration von Schutzfeldgrenzen erfolgt beispielweise durch Parametrierung oder über eine Software eines an den Laserscanner 10 angeschlossenen Installationsrechners.

Um während der Installation, aber auch bei Wartungen oder im späteren Betrieb die Möglichkeit zu haben, die eingestellten Schutzfelder zu prüfen, weist der Laserscanner 10 einen Projektor 42 auf, mit dessen Hilfe Schutzfelder in den Überwachungsbereich 20 projiziert werden können. Der Projektor verfügt vorzugsweise über eine eigene Steuereinheit 44, die über Anschlüsse 46, 48 mit der Auswertungseinheit 34 in Verbindung steht. Es ist aber auch denkbar, die Funktionalität der Steuereinheit 44 in die Auswertungseinheit 34 zu integrieren.

Obwohl prinzipiell jede Projektionstechnik möglich ist, nutzt der Projektor 42 in der Ausführungsform nach Figur 1 einen mittels Motor 50 rotierenden und mittels Verkippungseinrichtung 52 in seiner Neigung verstellbaren Projektionslichtsender 54, beispielsweise eine Laserlichtquelle im sichtbaren Wellenlängenbereich mit einer nicht dargestellten Projektionsoptik. Dadurch wird ein sichtbarer Projektionslichtstrahl 56 in den Überwachungsbereich 20 ausgesandt.

Der Projektionslichtstrahl 56 rotiert schnell genug, dass im Überwachungsbereich 20 und insbesondere dort auf dem Boden ein durchgängiger Kreis sichtbar wird. Zugleich ist die Verkippung schnell genug, um den Radius der Kreise während der Rotationen zu variieren und so insgesamt die Schutzfelder in Polarkoordinaten zu zeichnen.

Es sind zahlreiche Variationen des Projektors 42 möglich. In der in Figur 1 dargestellten Ausführungsform handelt es sich um ein Aufsteckgerät in einem eigenen Gehäuse 58. Dabei sind die Verbindungsflächen der beiden Gehäuse 38, 58 wohldefiniert, um für eine genaue und bekannte Relativlage zu sorgen, in der die angezeigten und überwachten Schutzfelder übereinstimmen. Nachstellschrauben oder eine andere Ausrichthilfe über Magnete sind denkbar. Alternativ zu einem separaten Aufsteckgerät kann der Projektor 42 aber auch in das Gehäuse 40 des eigentlichen Laserscanners integriert werden, insbesondere auch unter Mitnutzung des Motors 28 oder sogar der Ablenkeinheit 18. Denn der Projektionslichtsender 54 muss zur Erzeugung einer Rotationsbewegung nicht selbst rotieren, sondern kann dafür auch eine rotierende Ablenkeinheit nutzen, und zwar sowohl im Falle eines separaten Aufsteckgeräts als auch bei einer Integration in das Gehäuse 40.

Die Verkippungseinheit 52 erzeugt vorzugsweise ebenfalls keine direkte Bewegung des Projektionslichtsenders 54, obwohl das möglich ist, sondern bewegt einen Spiegel. Das kann ein zusätzlicher Spiegel im Pfad des Projektionslichtstrahls 56 oder ein Spiegel der Ablenkeinheit sein. Besonders geeignet sind steuerbare Mikrospiegel (DLP, Digital Light Processing).

Während in Figur 1 die Steuereinheit 44 und die Auswertungseinheit 34 eine direkte Verbindung über die Anschlüsse 46, 48 haben, ist auch denkbar, die Konfigurationsdaten mit den Schutzfeldgrenzen zunächst auszulesen, beispielsweise mit einem USB-Stick an einer entsprechenden Schnittstelle am Gehäuse 38, und anschließend in den Projektor 42 einzuspielen. Die Konfigurationsdaten können auch über einen angeschlossenen Computer oder eine übergeordnete Steuerung übertragen werden.

Sollen Schutzfelder auf den Boden gezeichnet werden, so muss der Steuereinheit 44 die Position des Laserscanners 10, nämlich dessen Höhe über dem Boden und seine Neigung, bekannt sein. Ansonsten käme es durch die Projektion zu erheblichen Verzerrungen, weil ein Schutzfeld in der Praxis deutlich über dem Niveau des Bodens konfiguriert wird.

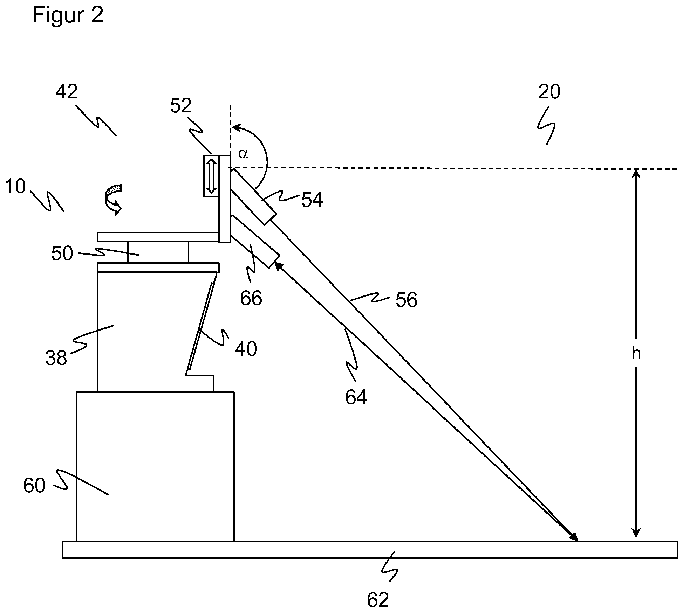

Figur 2 zeigt eine schematische Darstellung des Laserscanners 10 in einer Anwendungsumgebung. Dabei ist der Übersichtlichkeit halber nur ein kleiner Teil der Elemente des Laserscanners gezeigt, dann aber mit den gleichen Bezugszeichen versehen wie in Figur 1.

Der Laserscanner 10 steht auf einem Sockel 60 in einer gewissen Höhe über dem Boden 62. Der Projektor 42 erzeugt den sichtbaren Projektionsstrahl 56, der bei Auftreffen auf den Boden 62 einen Punkt und im Verlauf der überlagerten Rotations- und Kippbewegung durch Motor 50 und Verkippungseinrichtung 52 die Schutzfelder zeichnet. Die Maßstäbe in Figur 2 dienen nur der Erläuterung und sind eher untypisch, da der Laserscanner 10 deutlich meist höher montiert und klein gegenüber Entfernung und Dimensionen von Überwachungsbereich 20 und Schutzfeldern ist.

Zur Kalibration des Projektors 42 sollen Neigungswinkel α sowie Höhe h über dem Boden 62 bekannt sein. Für die Bestimmung des Neigungswinkels α können nicht dargestellte Neigungssensoren vorzugsweise in zwei Achsen verwendet werden, aus denen dann die Neigung in allen Richtungen abgeleitet werden kann. Diese Neigung wird dann bei der Projektion in den Kippwinkeln der Verkippungseinrichtung 52 kompensiert.

Die Höhe kann der Projektor 42 in einer bevorzugten Ausführungsform selbst bestimmen. Dazu wird in einem Kalibrierungsschritt in einer festen Winkelposition, also bei ruhendem Motor 50, der Projektionslichtsender 54 mit Hilfe der Verkippungseinrichtung 52 so lange verkippt, bis der am Boden 62 remittierte Projektionslichtstrahl 64 auf einen etwas unterhalb des Projektionslichtsenders 54 angebrachten Höhenmesslichtempfänger 66 trifft. Aus dem für diese Konstellation benötigten Kippwinkel kann in Kenntnis der zuvor bestimmten Neigung des Laserscanners 10 sowie der internen Geometrie, insbesondere des Abstands zwischen Projektionslichtsender 54 und Höhenmesslichtempfänger 66, die Höhe h berechnet werden.

In den bisher beschriebenen Ausführungsformen ist jeweils nur ein Projektionslichtsender 54 vorgesehen. Es ist denkbar, mehrere Lichtquellen unterschiedlicher Farbe vorzugsweise mit gegenseitigem Winkelversatz zu verwenden. Dadurch können bestimmte Schutzfelder oder Teile davon durch verschiedene Farben gekennzeichnet werden. Es ist auch möglich, den Typ eines Detektionsfeldes anzuzeigen, also beispielsweise Warnfelder in blau und Schutzfelder in rot oder gelb anzuzeigen.

Die Projektion von Detektionsfeldern ist besonders nützlich, wenn mehrere erfindungsgemäße Laserscanner 10 gemeinsam an einem Überwachungsbereich montiert sind. Dann ist sofort ersichtlich, wo sämtliche Detektionsfelder liegen. Durch unterschiedliche Farben kann das den beteiligten Laserscannern 10 zugeordnet werden und so die gemeinsame Konfiguration erheblich beschleunigt werden.

Die Erfindung eignet sich auch für mobile Anwendungen, beispielsweise bei der Absicherung von Fahrzeugen oder AGVs (Autonomous Guided Vehicle). Dort ist es in Konfiguration und Betrieb besonders vorteilhaft, wenn die insbesondere geschwindigkeitsangepassten Detektionsfelder angezeigt sind, beispielsweise um Personen den kritischen Bereich anzuzeigen, aus dem sie sich fernhalten müssen.

## Patentansprüche

1. Optoelektronischer Sensor (10), der als Sicherheitslaserscanner ausgebildet ist, mit einem Lichtsender (12) zum Aussenden eines Abtaststrahls (16) in einen Überwachungsbereich (20), einem Lichtempfänger (26) zum Erzeugen eines Empfangssignals aus dem von Objekten in dem Überwachungsbereich (20) remittierten Abtaststrahl (22), einer beweglichen Ablenkeinheit (18) zur periodischen Ablenkung des Abtaststrahls (16, 22), um im Verlauf der Bewegung den Überwachungsbereich (20) abzutasten, einem Sicherheitsausgang (36), einer Auswertungseinheit (34), die dafür ausgebildet ist, anhand des Empfangssignals zu erkennen, ob sich Objekte in mindestens einem als Schutzfeld ausgebildeten Detektionsfeld innerhalb des Überwachungsbereichs (20) befinden, um daraufhin ein sicherheitsgerichtetes Abschaltsignal über den Sicherheitsausgang (36) auszugeben, sowie mit einem Projektor (42) zur Visualisierung von Informationen des Sensors (10) in dem Überwachungsbereich (20),
**dadurch gekennzeichnet,**
**dass** der Projektor (42) eine Steuereinheit (44) aufweist, die dafür ausgebildet ist, das Schutzfeld durch Projektion auf den Boden (62) zu zeichnen, wobei in einer Kalibration Höhe des Projektors (42) über dem Boden und/oder Neigung des Projektors (42) festgestellt werden und mit Hilfe dieser Parameter berechnet wird, wie das Schutzfeld passend aus der Perspektive des Projektors (42) auf den Boden projiziert wird, ohne dass Verzerrungen entstehen, wenn das Schutzfeld nicht in Bodenhöhe konfiguriert ist.

2. Sensor (10) nach Anspruch 1,
wobei der Projektor (42) eine rotierende Lichtquelle (54) aufweist.

3. Sensor (10) nach Anspruch 2,
wobei der Projektor (42) eine Verkippeinheit (52) zur Einstellung der Neigung der Lichtquelle (54) aufweist.

4. Sensor (10) nach einem der vorhergehenden Ansprüche,
wobei der Projektor (42) einen Neigungssensor aufweist.

5. Sensor (10) nach einem der vorhergehenden Ansprüche,
wobei der Projektor (42) einen Detektor (66) aufweist, um die Höhe des Projektors (42) zu bestimmen.

6. Sensor (10) nach einem der vorhergehenden Ansprüche,
wobei der Projektor (42) als Zusatzmodul ausgebildet ist.

7. Sensor (10) nach einem der Ansprüche 1 bis 5,
wobei der Projektor (42) in den Sensor (10) integriert ist.

8. Sensor (10) nach einem der vorhergehenden Ansprüche,
wobei der Projektor (42) mehrere rotierende Lichtquellen mit unterschiedlichen Wellenlängen aufweist.

9. Sensor (10) nach einem der vorhergehenden Ansprüche,
der als Entfernungsmesser ausgebildet ist, indem die Auswertungseinheit (34) die Lichtlaufzeit zwischen Aussenden und Empfang des Abtaststrahls (16, 22) und daraus die Entfernung eines Objekts bestimmt und/oder wobei eine Winkelmesseinheit (30, 32) zur Erfassung der Winkelstellung der Ablenkeinheit (18) vorgesehen ist.

10. Sicherheitstechnisches Verfahren zum Erfassen von Objekten, bei dem ein Abtaststrahl (16) in einen Überwachungsbereich (20) ausgesandt wird, aus dem von Objekten in dem Überwachungsbereich (20) remittierten Abtaststrahl (22) ein Empfangssignal erzeugt und der Abtaststrahl (16, 22) mit einer drehbaren Ablenkeinheit (18) periodisch abgelenkt wird, um im Verlauf der Bewegung den Überwachungsbereich (20) abzutasten, und durch Auswertung des Empfangssignals erkannt wird, ob sich Objekte in einem als Schutzfeld ausgebildeten Detektionsfeld innerhalb des Überwachungsbereichs (20) befindet, um daraufhin ein sicherheitsgerichtetes Abschaltsignal über einen Sicherheitsausgang (36) auszugeben, wobei mit einem Projektor (42) Informationen in dem Überwachungsbereich visualisiert werden,
**dadurch gekennzeichnet,**
**dass** eine Steuereinheit (44) des Projektors (42) das Schutzfeld durch Projektion auf den Boden (62) zeichnet, wobei in einer Kalibration Höhe des Projektors (42) über dem Boden und/oder Neigung des Projektors (42) festgestellt werden und mit Hilfe dieser Parameter berechnet wird, wie das Schutzfeld passend aus der Perspektive des Projektors (42) auf den Boden projiziert wird, ohne dass Verzerrungen entstehen, wenn das Schutzfeld nicht in Bodenhöhe konfiguriert ist.

11. Verfahren nach Anspruch 10,
wobei das Schutzfeld projiziert wird, indem eine sichtbare Lichtquelle (54) des Projektors (42) rotiert und entsprechend der Grenzen des Schutzfelds unter Berücksichtigung von Neigung und Höhe des Projektors (42) in ihrer Kippstellung variiert und aktiviert wird.

12. Verfahren nach Anspruch 11,
wobei der Projektor (42) sich selbst kalibriert, um seine Neigung und Höhe festzustellen.

## Claims

1. An optoelectronic sensor (10) which is configured as a safety laser scanner, comprising a light transmitter (12) for transmitting a scanning beam (16) into a monitored zone (20), a light receiver (26) for generating a received signal from the remitted scanning beam (22) remitted by objects in the monitored zone (20), a movable deflection unit (18) for a periodical deflection of the scanning beam (16, 22) in order to scan the monitored zone (20) in the course of the movement, a safety output (36), an evaluation unit (34) which is configured to recognize whether there are objects in at least one detection field configured as a protected field within the monitored zone (20) with reference to the received signal in order thereupon to output a safety-related shut-down signal via the safety output (36), as well as a projector (42) for visualizing information of the sensor (10) in the monitored zone (20),
**characterized in that** the projector (42) comprises a control unit (44) configured to draw the protected field by projection onto the floor (62), wherein a height of the projector (42) with respect to the floor and/or a tilt of the projector (42) is determined in a calibration and wherein, based on these parameters, it is calculated how the protected field is appropriately projected onto the floor (62) from the perspective of the projector (42) without distortions arising in case that the protected field is not configured at the height of the floor.

2. The sensor (10) in accordance with claim 1,
wherein the projector (42) has a rotating light source (54).

3. The sensor (10) in accordance with claim 2,
wherein the projector (42) has a tilt unit (52) for setting the tilt of the light source (54).

4. The sensor (10) in accordance with any of the preceding claims,
wherein the projector (42) has a tilt sensor.

5. The sensor (10) in accordance with any of the preceding claims,
wherein the projector (42) has a detector (66) for determining the height of the projector (42).

6. The sensor (10) in accordance with any of the preceding claims,
wherein the projector (42) is configured as an additional module.

7. The sensor (10) in accordance with any of claims 1 to 5,
wherein the projector (42) is integrated into the sensor (10).

8. The sensor (10) in accordance with any of the preceding claims,
wherein the projector (42) has a plurality of rotating light sources having different wavelengths.

9. The sensor (10) in accordance with any of the preceding claims, which is configured as a range finder in that the evaluation unit (34) determines the light time of flight between the transmission and the reception of the scanning beam (16, 22) and, from that, determines the distance of an object and/or wherein an angle measurement unit (30, 32) for detecting the angular position of the deflection unit (18) is provided.

10. A safety method of detecting objects, wherein a scanning beam (16) is transmitted into a monitored zone (20), a received signal is generated from the remitted scanning beam (22) remitted by objects in the monitored zone (20) and the scanning beam (16, 22) is periodically deflected by a rotatable deflection unit (18) in order to scan the monitored zone (20) in the course of the movement, and wherein it is recognized by evaluating the received signal whether objects are located in a detection field configured as a protected field within the monitored zone (20) in order thereupon to output a safety-related shut-down signal via a safety output (36), with information being visualized in the monitored zone (20) using a projector (42), **characterized in that** a control unit (44) of the projector (42) draws the protected field onto the floor (62) by projection, wherein a height of the projector (42) with respect to the floor and/or a tilt of the projector (42) is determined in a calibration and wherein, based on these parameters, it is calculated how the protected field is appropriately projected onto the floor (62) from the perspective of the projector (42) without distortions arising in case that the protected field is not configured at the height of the floor.

11. The method in accordance with claim 10,
wherein the detection field is projected in that a visible light source (54) of the projector (42) rotates and is varied in its tilt and activated in accordance with the boundaries of the protected field while taking account of the tilt and height of the projector (42).

12. The method in accordance with claim 11,
wherein the projector (42) calibrates itself to determine its tilt and height.

## Revendications

1. Capteur optoélectronique (10) réalisé sous forme de scanneur laser de sécurité, comportant un émetteur de lumière (12) pour émettre un rayon de balayage (16) dans une zone à surveiller (20), un récepteur de lumière (26) pour générer un signal de réception à partir du rayon de balayage (22) réémis par des objets dans la zone à surveiller (20), une unité de déviation mobile (18) pour la déviation périodique du rayon de balayage (16, 22) pour balayer la zone à surveiller (20) au fur et à mesure du mouvement, une sortie de sécurité (36), une unité d'évaluation (34) qui est réalisée pour reconnaître à partir du signal de réception si des objets se trouvent dans au moins un champ de détection réalisé sous forme de champ de protection à l'intérieur de la zone à surveiller (20), afin d'émettre ensuite un signal de coupure relatif à la sécurité par la sortie de sécurité (36), ainsi qu'un projecteur (42) pour visualiser des informations du capteur (10) dans la zone à surveiller (20),
**caractérisé en ce que**
le projecteur (42) comprend une unité de commande (44) qui est conçue pour tracer le champ de protection par projection sur le sol (62), et un calibrage permet de déterminer la hauteur du projecteur (42) au-dessus du sol et/ou l'inclinaison du projecteur (42), et ces paramètres permettent de calculer comment le champ de protection est projeté sur le sol de façon adaptée depuis la perspective du projecteur (42), sans qu'il résulte des distorsions lorsque le champ de protection n'est pas configuré à la hauteur du sol.

2. Capteur (10) selon la revendication 1,
dans lequel le projecteur (42) comprend une source de lumière (54) rotative.

3. Capteur (10) selon la revendication 2,
dans lequel le projecteur (42) comprend une unité de basculement (52) pour régler l'inclinaison de la source de lumière (54).

4. Capteur (10) selon l'une des revendications précédentes,
dans lequel le projecteur (42) comprend un capteur d'inclinaison.

5. Capteur (10) selon l'une des revendications précédentes,
dans lequel le projecteur (42) comprend un détecteur (66) pour définir la hauteur du projecteur (42).

6. Capteur (10) selon l'une des revendications précédentes,
dans lequel le projecteur (42) est réalisé sous forme de module supplémentaire.

7. Capteur (10) selon l'une des revendications 1 à 5,
dans lequel le projecteur (42) est intégré dans le capteur (10).

8. Capteur (10) selon l'une des revendications précédentes,
dans lequel le projecteur (42) comprend plusieurs sources de lumière rotatives présentant différentes longueurs d'onde.

9. Capteur (10) selon l'une des revendications précédentes,
qui est réalisé sous forme de télémètre du fait que l'unité d'évaluation (34) définit le temps de parcours de la lumière entre l'émission et la réception du rayon de balayage (16, 22) et ainsi la distance d'un objet, et/ou dans lequel est prévue une unité de mesure angulaire (30, 32) pour détecter la position angulaire de l'unité de déviation (18).

10. Procédé de sécurité pour détecter des objets, dans lequel un rayon de balayage (16) est émis dans une zone à surveiller (20), un signal de réception est généré à partir du rayon de balayage (22) réémis par des objets dans la zone à surveiller, le rayon de balayage (16, 22) est dévié périodiquement par une unité de déviation rotative (18), afin de balayer la zone à surveiller (20) au fur et à mesure du mouvement, et il est reconnu par évaluation du signal de réception si des objets se trouvent dans un champ de détection réalisé sous forme de champ de protection à l'intérieur de la zone à surveiller (20), afin d'émettre ensuite un signal de coupure relatif à la sécurité par une sortie de sécurité (36), dans lequel des informations sont visualisées dans la zone à surveiller à l'aide d'un projecteur (42),
**caractérisé en ce que**
une unité de commande (44) du projecteur (42) trace le champ de protection par projection sur le sol (62), et un calibrage permet de déterminer la hauteur du projecteur (42) au-dessus du sol et/ou l'inclinaison du projecteur (42) et ces paramètres permettent de calculer comment le champ de protection est projeté sur le sol de façon adaptée depuis la perspective du projecteur (42), sans qu'il résulte des distorsions lorsque le champ de protection n'est pas configuré à la hauteur du sol.

11. Procédé selon la revendication 10,
dans lequel le champ de protection est projeté du fait qu'une source de lumière visible (54) du projecteur (42) est tournée et variée vis-à-vis de sa position basculée et qu'elle est activée en correspondance des délimitations du champ de protection par prise en compte de l'inclinaison et de la hauteur du projecteur (42).

12. Procédé selon la revendication 11,
dans lequel le projecteur (42) se calibre lui-même pour déterminer son inclinaison et sa hauteur.
